## Europäisches Patentamt
## European Patent Office
## Office européen des brevets

(11) Veröffentlichungsnummer: **0 285 845 B1**

# EUROPÄISCHE PATENTSCHRIFT

(45) Veröffentlichungstag der Patentschrift: **14.08.91**

(51) Int. Cl.5: **G21C 9/00**

(21) Anmeldenummer: **88103829.3**

(22) Anmeldetag: **10.03.88**

(54) **Verfahren und Einrichtung zur Druckentlastung eines Kernkraftwerkes.**

(30) Priorität: 23.03.87 DE 3709471
03.09.87 DE 3729501

(43) Veröffentlichungstag der Anmeldung:
**12.10.88 Patentblatt 88/41**

(45) Bekanntmachung des Hinweises auf die
Patenterteilung:
**14.08.91 Patentblatt 91/33**

(84) Benannte Vertragsstaaten:
**BE CH DE ES FR IT LI**

(56) Entgegenhaltungen:
**EP-A- 0 056 830**
**DE-A- 3 212 265**
**GB-A- 2 055 241**
**GB-A- 2 178 138**

**NUCLEAR ENGINEERING INTERNATIONAL,
Band 33, Nr. 404, März 1988, Seiten 36-37,
Sutton, Surrey, GB; H. ENGEL: "Germans use
sliding pressure containment venting system"**

(73) Patentinhaber: **Siemens Aktiengesellschaft
Wittelsbacherplatz 2
W-8000 München 2(DE)**

(72) Erfinder: **Eckardt, Bernd
Kastanienweg 14
W-6454 Bruchköbel(DE)**

**Beschreibung**

Die Erfindung betrifft ein Verfahren zur Druckentlastung eines Kernkraftwerkes mit einer Sicherheitshülle, die eine Auslaßöffnung und einen daran angeschlossenen Filter aufweist, der mit einem Kamin in Verbindung steht. Ferner richtet sich die Erfindung auf eine Einrichtung zur Ausübung des vorgenannten Verfahrens.

Gegenüber älteren Vorschlägen, z.B. entsprechend den Patentanmeldungen P 36 37 845.3 und P 36 37 795.3 (VPA 86 P 6080 DE und VPA 86 P 6081 DE) geht die Erfindung von der Aufgabe aus, eine Verringerung des Aufwandes für die Druckentlastung zu erreichen. Hintergrund dieser Aufgabe ist die Tatsache, daß die Druckentlastung nur bei solchen extremen Störfällen Nutzen bringen kann, die nach den bisherigen Vorstellungen auszuschließen sind. Da die Notwendigkeit der Druckentlastung äußerst unwahrscheinlich ist, ist eine Verringerung des Aufwandes besonders vorteilhaft. Dabei soll die Erfindung für die verschiedenen Möglichkeiten gleich gut geeignet sein, die als Voraussetzung für die Druckentlastung für Dekontanimierung der aus der Sicherheitshülle austretenden Medien zur Verfügung steht.

Erfindungsgemäß ist vorgesehen, daß der Filter mit einem abhängig vom Druck in der Sicherheitshülle geregelten Gleitdruck betrieben wird. Je höher der Druck, desto größer ist der Massendurchsatz, bei nur leicht reduzierter Filterwirkung. Deshalb kommt man mit kleineren Filtern, dünnereren Leitungen, Armaturen usw. aus.

Die Filterung kann mit unterschiedlichen Filtern vorgenommen werden, die nacheinander eingesetzt werden. Dabei kann vorteilhaft in zwei Stufen ein erstes gröberes Filterelement auch zur Feuchteabscheidung verwendet und rückgespült werden, während ein zweites Filterelement, vorzugsweise mit einer Metallfaserbelegung mit 2 - 4 $\mu$m zur Rückhaltung von Feinstaerosolen für einen Dekontfaktor von 1000 bis 10 000 trocken betrieben wird. Diese zweistufige Filterung eignet sich auch gut für den Fall, daß eine Reinigung mit Naßwäschern vorgeschaltet ist.

Mit dem Betrieb einer Kombination aus Naßwäscher mit Filtern, insbesondere Hochleistungs-Edelstahlfaservorfilter als Wasserabscheider und Feinstaerosolnachfiltern, bei gleitendem Überdruckbetrieb gelingt eine hocheffektive Aerosol- und Joddrückhaltung aus den aus der Sicherheitshülle abströmenden Überdruckgasen (Containmentventing) bei kompakter Bauweise.

Da bei der Erfindung die Druckentlastung mit dem Überdruck der Sicherheitshüllse gekoppelt ist, wird bei höchster Druckbelastung der Sicherheitshülle durch die höchsten Auslaßströme die maximale Entlastung erhalten. Der Naßwäscher kann hierbei für eine weitgehende Abscheidung der Grobaerosole sorgen. Erreicht wird eine Reinigung von mehr als 99 % für Teilchen über ein Mikrometer Größe. Auch für Feinaerosole wird eine große Abscheidungsrate von z.B. mehr als 80 % erhalten.

Durch eine Beimischung von alkalischen Substanzen zur Waschflüssigkeit kann man eine Jodabsorption in der Waschflüssigkeit erreichen. Aufgrund der Gaskompression ergibt sich dabei eine maximale Massenbaufschlagung. Dies erlaubt kleinstmögliche Querschnitte von Durchlaßleitungen und geringe Waschflüssigkeitsmengen. Der dem Druck der Sicherheitshülle angepaßte Druck in dem Gaswäscher verhindert außerdem das Ausdampfen von Waschflüssigkeit, so daß eine Langzeitautarkie hinsichtlich einer Waschflüssigkeitsnachspeisung erreicht wird.

Der Gleitdruck kann mit einer kritischen Entspannung für einen gleichmäßigen Durchsatz passiv geregelt werden, so daß die Beaufschlagung von gegebenenfalls Gaswäscher und Filter geschwindigkeitsmäßig immer im Rahmen der optimalen Grenzen liegt. Dabei können Naßwäscher und Filter mit dem gleichen Druck beaufschlagt werden. Die Erfindung kann aber auch mit unterschiedlichen Drücken verwirklicht werden, um bestimmte Strömungsverteilungen zu erhalten.

Naßwäscher und/oder Filter können mit erhöhter Temperatur, vorzugsweise bei mehr als 100 $^\circ$ C, betrieben werden. Unter Umständen kann die dafür und zu einer Vorinertisierung notwendige Wärme auch über einen Wärmeübertragungskreis mit Stickstoff und Wasserdampf aus der Sicherheitshülle entnommen werden, die druckentlastet werden soll.

Eine zur Ausübung des erfindungsgemäßen Verfahrens besonders geeignete Druckentlastungseinrichtung ist so ausgebildet, daß eine Drosseleinrichtung zwischen dem Filter und dem Kamin angeordnet ist. Die Drosseleinrichtung kann eine Drosseleinrichtung sein, die in einen Raum mit Atmosphärendruck führt. Vorzugsweise ist die Drosseleinrichtung für das Arbeiten im Bereich der Schallgeschwindigkeit (kritische Entspannung) ausgelegt, weil dann eine Überlastung der Komponenten durch zu hohe Gasgeschwindigkeit vermieden werden kann.

Der Naßwäscher und das Filter können an einem gemeinsamen Gehäuse angeordnet sein, wobei der Filter vorteilhaft an der Behälteraußenwand sitzt. Hierdurch kann der bauliche Aufwand besonders gering gehalten werden. Da der Behälter den Druck der Sicherheitshülle führen soll, kann es günstig sein, wenn er in der Sicherheitshülle untergebracht ist, so daß praktisch kein Differenzdruck auf die Behälterwand wirkt.

Der Naßwäscher ist vorzugsweise als Venturiwäscher ausgebildet. Solche Wäscher sind an sich bekannt. Neuartig und besonders vorteilhaft ist jedoch eine "verkürzte" Form der Venturiwäscher, die ein Verhältnis von Höhe zu Kehlbreite von höchstens 20, vorzugsweise etwa 10 haben, wobei die größte Höhe 100 cm und die Kehlenbreite 5 cm nicht überschreiten sollte. Oberhalb der Venturiwäscher empfehlen sich Prallabscheider, insbesondere in der Waschflüssigkeit.

Der Filter besteht aus Porösmaterial und umfaßt vorzugsweise einen Metallfaserfilter als Feinstfilter und einen vorgeschalteten Tropfenabscheider. Dabei kann der Einlaßbereich eines zugehörigen Filterbehälters so konzipiert sein, daß eine geringe Geschwindigkeit in den sogenannten Leerrohren eine gute Grobtropfenabscheidung ermöglicht. Zu diesem Zweck kann z.B. Strömungsquerschnitt zwischen dem Naßwäscher und dem Filter das Mehrfache des Einlaßquerschnittes in den Naßwäscher betragen.

Die erforderliche Feinsttropfenabscheidung für Tropfen bis etwa 1 µm Durchmesser wird mit einer Metallfaservorfilterstufe oder mit einem Filter aus Poröskeramik durchgeführt. In der mit kurzem Abstand direkt nachgeschalteten Metallfaserfeinstfilterstufe erfolgt die Rückhaltung feinster Aerosole. Dabei wird durch den Überdruckbetrieb in der Feinstfiltereinheit bei gleicher Anströmgeschwindigkeit und bei Betrieb mit z.B. 5 bar praktisch nur im Feinstaerosolbereich ein leicht reduzierter Abscheidegrad erreicht. Er kann aber bei Bedarf ausgeglichen werden, z.B. durch eine Vor- oder Nachbehandlung. So wird die Verringerung durch den erhöhten Druck in einem vorgeschalteten Naßwäscher in der Gesamtwirkung praktisch vollständig kompensiert.

Die gegebenenfalls als Vorfilter wirkende Feuchteabscheiderstufe kann durch eine Feinfiltermaterialbelegung so ausgebildet werden, daß zusammen mit dem vorgeschalteten Venturiwäscher außer der Feinsttröpfchenabscheidung auch gleichzeitig eine hochwirksame Feinstaerosolabscheidung erfolgt mit der bereits Dekontfaktoren > 100 über den gesamten Druckbereich erreicht werden.

Weiterhin wird das besonders bei Überdruckbetrieb von Tiefbett-Metallfaserfiltern auftretende Problem der erhöhten Staubkonzentration, das bei Vorhandensein entsprechend geringer Filterflächen leicht zu einer Überschreitung der Staubspeicherfähigkeit solcher Filter führt, durch die Rückhaltung der relevanten Staubmengen in einem Naßwäscher sicher vermieden. Die Einlagerung des überwiegenden Teiles der Aktivitäten in einem Vorfilter oder im Naßwäscher und das teilweise Rückspülen der Aktivitäten aus dem Vorfilter/Tropfenabscheiderteil in die Waschflüssigkeit oder Kondensatorrückleitung ergeben den Vorteil einer Aktivitätseinlagerung in Flüssigkeiten relativ geringer Menge (ein Aktivitätsabblasen bei Durchsatzerhöhungen wird vermieden), sowie optimale Nachwärmeabführmöglichkeiten, was zu einer generellen Betriebssicherheitserhöhung führt.

Durch eine im Lavalgeschwindigkeitsbereich arbeitende nachgeschaltete Drosseleinrichtung, die vorteilhafterweise mit einem Überschalldiffusor ausgerüstet ist, wird weiterhin in passiver Weise bei maximalen Störfallentlastungsdruck eine ausreichende Entlastung der Sicherheitshülle gewährleistet und eine Überschreitung der zulässigen Gasgeschwindigkeiten in der Aktivitätsrückhalteeinrichtung vermieden. Weiterhin kann besonders beim Vorhandensein von hohen Wasserstoffkonzentrationsanteilen durch ständigen Überdruck im Prozeß die Möglichkeit von $O_2$-Einbrüchen sicher vermieden werden und bei entsprechender Anordnung der Drossel- und Düseneinrichtung die Möglichkeit der sicheren Wasserstofffreisetzung in die Umgebung durch Nutzung der Kompressionsenergien ohne Verbrennungseinrichtungen ermöglicht.

Bei Naßwäsche kann durch Einbringen von anderen Chemikalien als die erwähnten alkalischen Substanzen für die Jodabsorption auch die Oberflächenspannung und somit Tropfenzerstäubung und Aerosolbestäubung so beeinflußt werden, daß erhöhte Abscheidegrade erreicht werden.

Zur näheren Erläuterung der Erfindung werden anhand der Zeichnung Ausführungsbeispiele beschrieben. Es zeigt

FIG 1 eine Druckentlastungseinrichtung bei einem Siedewasserreaktor,

FIG 2 eine geänderte Druckentlastungseinrichtung ebenfalls bei einem Siedewasserreaktor,

FIG 3 einen Behälter mit einem Naßwäscher und mit diesem zusammen integrierter Metallfaserfiltereinheit,

FIG 4 eine Druckentlastungseinrichtung für einen Druckwasserreaktor,

FIG 5 die Druckentlastungseinrichtung eines Druckwasserreaktors mit getrenntem Wäscher und Filter,

FIG 6 die Druckentlastungseinrichtung eines Siedewasserreaktors mit Trockenfiltern ohne Gaswäsche,

FIG 7 die Ausbildung eines Behälters mit Trockenfiltern nach FIG 6 in größerem Maßstab,

FIG 8 die Anordnung von Venturiwäschern, wie sie entsprechend dem Unterteil des Behälters nach FIG 3 eingesetzt werden können, und

FIG 9 die Venturiwäscher nach FIG 8 mit einem niedrigeren Waschflüssigkeitsstand.

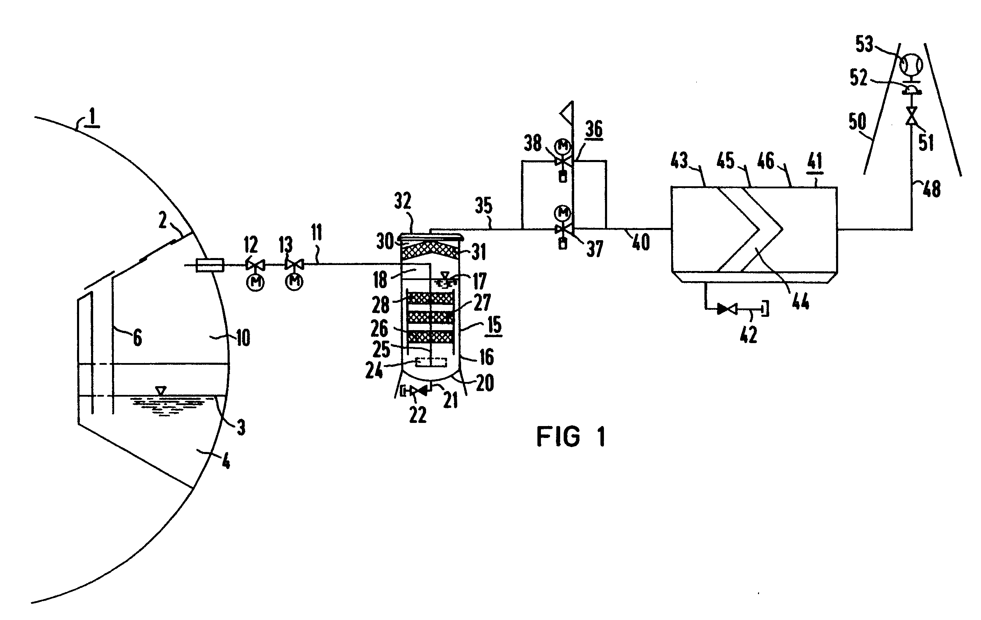

In FIG 1 ist ein Siedewasserreaktor zur Elektrizitätserzeugung für z.B. 1000 MWE durch seine kugelförmige Sicherheitshülle 1 angedeutet, die die nuklearen Komponenten enthält. In der Sicherheitshülle 1 ist eine ringförmige Kondensationskammer 2 abgeteilt, die bis zum Wasserspiegel 3 mit Wasser 4 gefüllt ist. In die Kondensationskammer 2 führen Abblaserohre 6, so daß bei einem Störfall in der Sicherheitshülle 1 auftretender Dampf in das Wasser 4 geleitet und dadurch kondensiert werden kann.

An den Luftraum 10 oberhalb des Wasserspiegels 3 ist eine Auslaßleitung 11 angeschlossen, die zwei in Reihe geschaltete Absperrventile 12 und 13 aufweist. Die Leitung hat einen Durchmesser von 300 mm. Sie führt in einen Naßwäscher 15.

Der Naßwäscher 15 besitzt einen zylindrischen Behälter 16, der bis zum Wasserspiegel 17 mit Waschwascher 18 gefüllt ist. Der Flüssigkeitsspiegel 17 liegt auf etwa dreiviertel der Behälterhöhe. Im Boden 20 des Behälters 16 ist eine Auslaßleitung 21 angebracht, die mit einem Absperrventil 22 normalerweise verschlossen ist.

In der Nähe des Bodens 20 sind Auslaßdüsen 24 am Ende der Einlaßleitung 25 angebracht, so daß daraus das aus der Sicherheitshülle 1 zur Druckentlastung abgelassene Dampf- und Gasvolumen in die Waschflüssigkeit 18 eingeleitet wird. Das Gasvolumen durchquert bei seinem Weg nach oben durch die Waschflüssigkeit drei mit Abstand voneinander angeordnete Filterpartien 26, 27 und 28. Dadurch werden radioaktive Aerosole ausgewaschen und eine Dekontamination erreicht.

Oberhalb des Wasserspiegels 17 ist in dem Luftraum 30 ein Tropfenabscheider 31 vorgesehen. Hierbei handelt es sich um ein Grobfilter mit einer konischen Konfiguration, so daß die abgeschiedenen Tropfen an der Innenwand des Behälters 16 hinunterrinnen und in die Waschflüssigkeit 18 zurückkehren.

Am Deckel 32 des Behälters 16 ist eine Auslaßleitung 35 angeschlossen. Sie führt zu einer Drosseleinrichtung 36 mit zwei parallel angeordneten Drosselventilen 37 und 38. Die Drosselventile sorgen für eine Entspannung des in der Sicherheitshülle 1 herrschenden Überdruckes von maximal z.B. 5 bar auf Atmosphärendruck.

Hinter der Drosseleinrichtung 36 führt eine Auslaßleitung 40 mit einer Nennweite von 800 mm in ein Feinfilter 41. Das Feinfilter ist mit einer Ablaßleitung 42 versehen. Mit 43 ist eine Druckmeßeinrichtung bezeichnet, die vor einem Filtereinsatz 44 angeordnet ist. Hinter dem Filtereinsatz 44 ist eine Temperaturmeßstelle 45 vorgesehen. Mit 46 ist eine Meßstelle für Sauerstoff bezeichnet. In dem Feinfilter 41 werden Feinstaerosole bis zu einer Größe von 1 μm oder weniger abgeschieden.

Aus dem Feinfilter 41 führt eine Auslaßleitung 48 ebenfalls mit Nennweite 800mm in einem Kamin 50. Die Auslaßleitung ist mit einem Absperrventil 51 versehen und mit einer Berstscheibe 52 für den Normalfall verschlossen. Die Berstscheibe 52 hat z.B. einen Ansprechdruck von 5 bar. Ferner ist im Kamin 50 eine Strahlpumpe 53 angeordnet, mit der die sichere Vermischung von Wasserstoff zur Verteilung in die Atmosphäre vorgenommen wird.

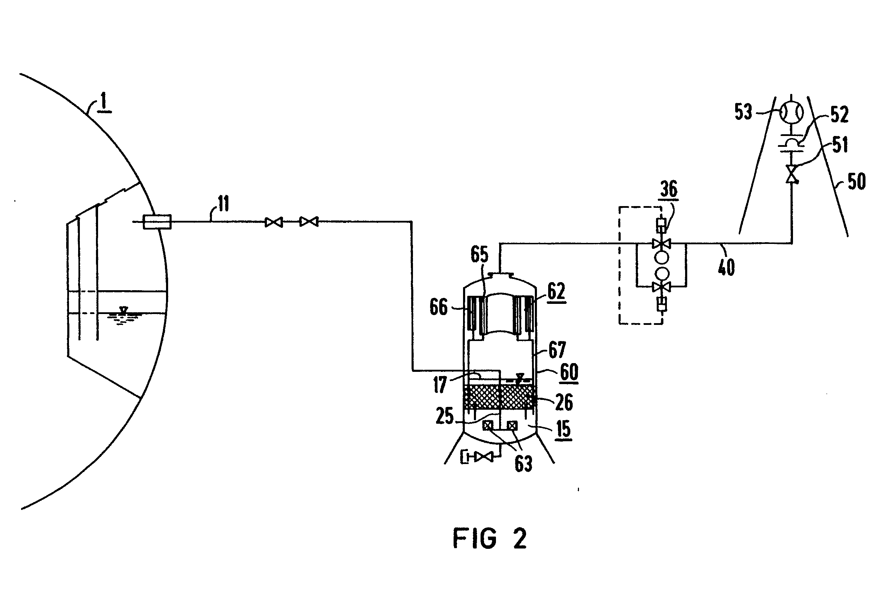

Bei dem Ausführungsbeispiel nach FIG 2 führt die an die Sicherheitshülle 1 angeschlossene Auslaßleitung 11 in einen Behälter 60, in dem ein Feinfilter in Form einer integrierten Filtereinheit 62 eingebaut ist. Der Wasserspiegel 17 liegt hier in der unteren Behälterhälfte. Das Ende der Einlaßleitung 25 ist in Form von Venturiwäschern 63 ausgebildet. Deswegen ist nur noch ein einzelnes, allerdings in der Höhe vergrößertes Filter 26 unter dem Wasserspiegel 17 vorgesehen.

Die Filtereinheit 62 umfaßt eine Grobstufe 65 und eine diese konzentrisch umgebende Feinstufe 66. Beide sind als Metallfaserfilter ausgebildet. Das in ihnen abgeschiedene Wasser wird über Leitungen 67 in den Bereich unterhalb des Filters 26 zurückgeführt.

Die Drosseleinrichtung 36, die wiederum zur Entspannung von dem im Behälter 60 vorhandenen Innendruck der Sicherheitshülle 1 auf Atmosphärendruck dient, ist so ausgelegt, daß in die Auslaßleitung 40 stets die gleiche maximale Gasmenge gelangt. Sie entweicht dann durch das in Form einer Klappe ausgebildete Absperrventil 51, nach dem die Berstscheibe 52 angesprochen und den Auslaß der Leitung 40 geöffnet hat.

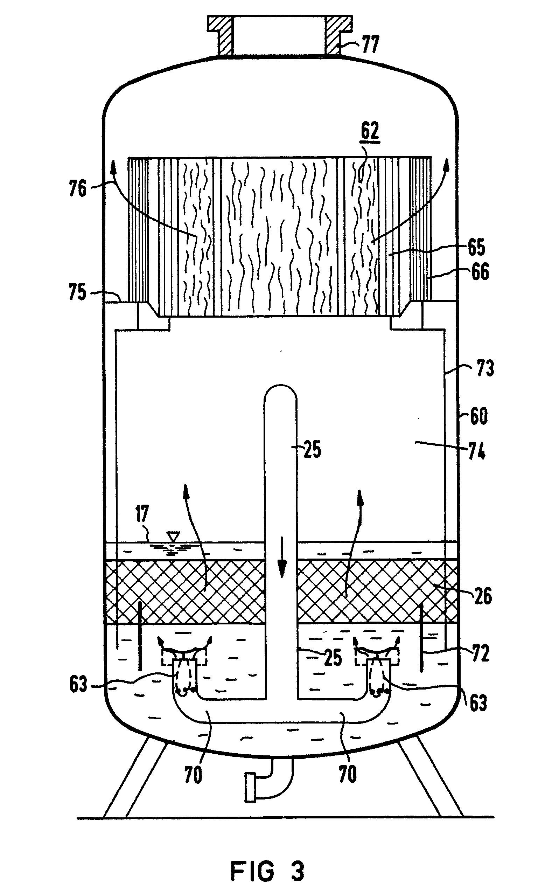

In FIG 3 ist der integrierte Wäscher-Filter-Behälter 60 in einem Querschnitt in größerem Maßstab dargestellt. Man erkennt darin genauer, daß das Ende 25 der Einlaßleitung über mehrere Arme 70 zu einzelnen Venturiwäschern 63 führt. Das aus diesen aufsteigende Gasluftgemisch wird durch eine zylindrische Wand 72 in den mittleren Bereich des Filters 26 geleitet. Oberhalb des Flüssigkeitsspiegels 17 sind Rücklaufleitungen 73 für die Waschflüssigkeit aus der Filtereinheit 62 vorgesehen. Wie man sieht, ist der Querschnitt des Behälters 60 vielfach größer als der der Einlaßleitung 25. Dies führt dazu, daß hinter dem Filter 26 nur eine geringe Gasgeschwindigkeit vorhanden ist. Dadurch wird das Mitreißen von Flüssigkeit vermieden.

Die Filtereinheit 62 mit ihren Filterteilen 65 und 66 sitzt auf einer Konsole 75. Mit dieser wird der Raum oberhalb des Filter 62 abgeschlossen, so daß Gase in Richtung der Pfeile 76 zu dem Auslaß 77 geführt werden.

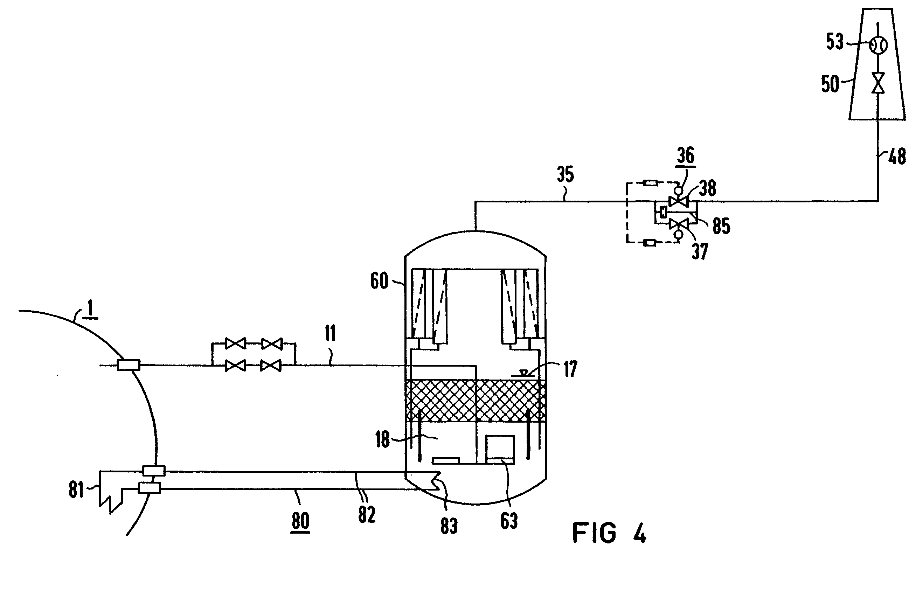

Bei dem Ausführungsbeispiel nach FIG 4 ist die integrierte Wäscher-Filtereinheit 60 an die Sicherheitshülle 1 eines Druckwasserreaktors angeschlossen. Dabei wird die Waschflüssigkeit 18 unterhalb des Flüssigkeitsspiegels 17 durch einen Heizkreis 80 erwärmt, der als Thermosyphon ausgeführt ist. Der Heizkreis 80 umfaßt einen Wärmetauscher 81 im Inneren der Sicherheitshülle. Dieser ist über Leitungen 82 mit einem Wärmetauscher 83 unterhalb der Venturiwäscher 63 verbunden.

Die Drosseleinrichtung 36 ist in Form einer Lavalldrosselung so ausgelegt, daß abgeleitete Gase maximal mit Schallgeschwindigkeit strömen. Dabei ist parallel zu den Drosselventilen 37 und 38 ein Strang 85 zur Mengenbegrenzung von inertisierenden Gasen vorgesehen.

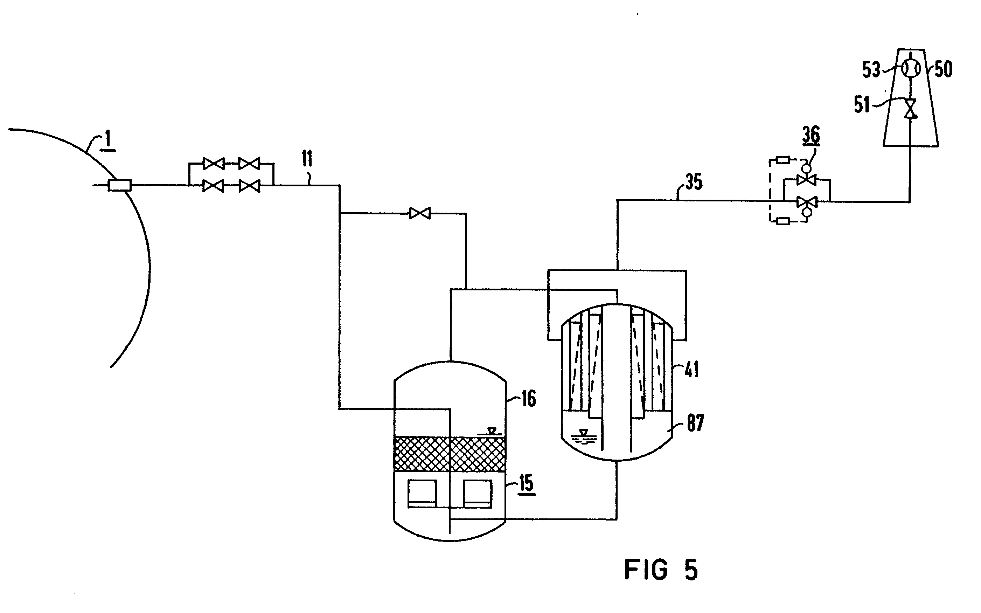

Bei dem Ausführungsbeispiel nach FIG 5 ist die Druckentlastung wiederum an die Reaktorsicherheitshülle 1 eines Druckwasserreaktors angeschlossen. Hier ist jedoch ähnlich wie bei dem Ausführungsbeispiel nach FIG 1 die Naßwäschereinrichtung 15 getrennt von dem Feinstfilter 41 vorgesehen. Aus dem Gehäuse 87 führt eine Leitung in den Behälter 16 zurück.

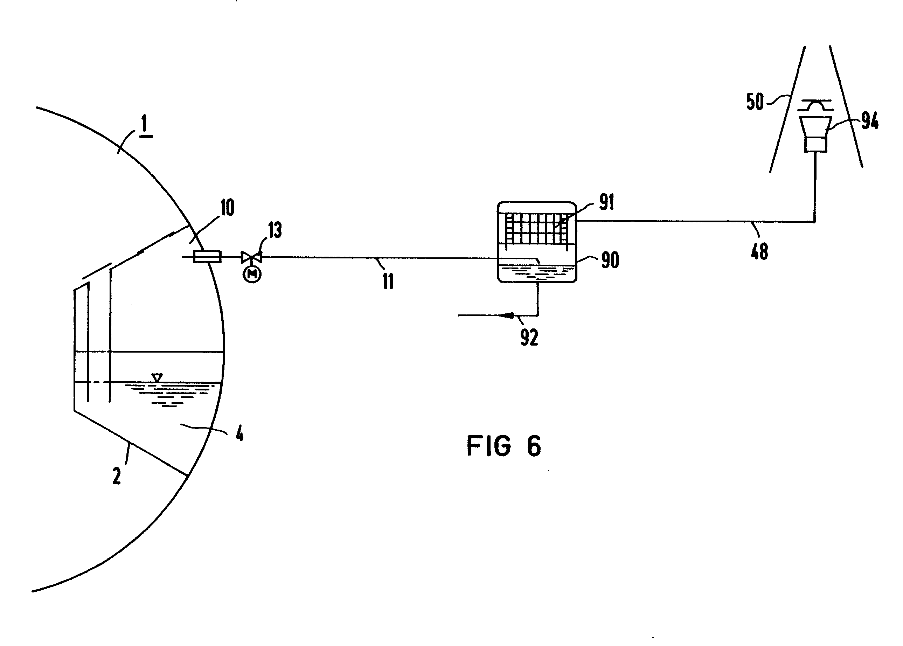

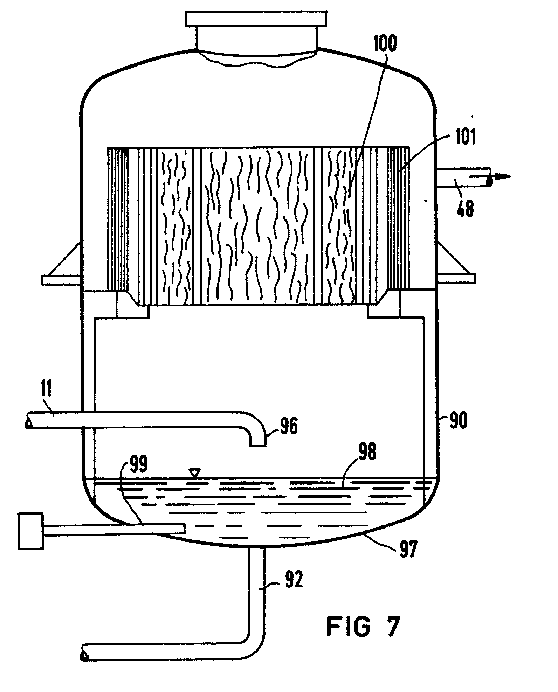

Der Naßwäscher 15 kann aber auch entfallen, so daß lediglich ein Filter vorhanden ist, der mit Gleitdruck entsprechend dem Überdruck in der Sicherheitshülle 1 beaufschlagt wird. Ein Beispiel hierfür zeigt die FIG 6 mit einem Siedewasserreaktor. Die an den Gasraum 10 der Kondensationskammer 2 angeschlossene Auslaßleitung 11 mit dem Absperrventil 13, die zum Kondensatablauf mit Gefälle verlegt ist, führt in einen Behälter 90 mit Filtern 91, die mit Gleitdruck betrieben werden. Vom Boden des Behälters 90, der in FIG 7 näher dargestellt ist, führt eine Kondensatrückleitung 92, die mit einer geeigneten Regulierung versehen ist, zu einem Sammelbehälter oder über Rückschlagklappen in das Wasservolumen 4 der Kondensationskammer 2. Die Auslaßleitung 48 führt über einen Mengenbegrenzer 94 in Form einer Lavaldüse in den Kamin 50. Sinngemäß kann die Druckentlastung nach FIG 6 auch für die Sicherheitshülle eines Druckwasserreaktors eingesetzt werden.

Der Behälter 90 hat z.B. einen Durchmesser von 2,5 m und eine etwa ebenso große Höhe. In die untere Hälfte führt die Leitung 11, die im Zentrum mit einem nach unten gerichteten Krümmer 96 endet. Der Behälterboden 97 ist mit Kondensat 98 bedeckt, das durch eine Heizung 99 auf einer Temperatur von ca. 100 °C gehalten, um eine Aufkonzentrierung mit Wasserstoff zu vermeiden.

In der oberen Hälte des Behälters 90 sind ein Vorfilter 100 und ein Feinfilter 101 konzentrisch angeordnet. Der Vorfilter 100 dient vor allem als Wasserabscheider und kann bei Bedarf rückgespült werden. Der Feinfilter 101 ist als Aerosolfilter mit Durchlaßwerten von wenigen μm als Faserfilter ausgebildet.

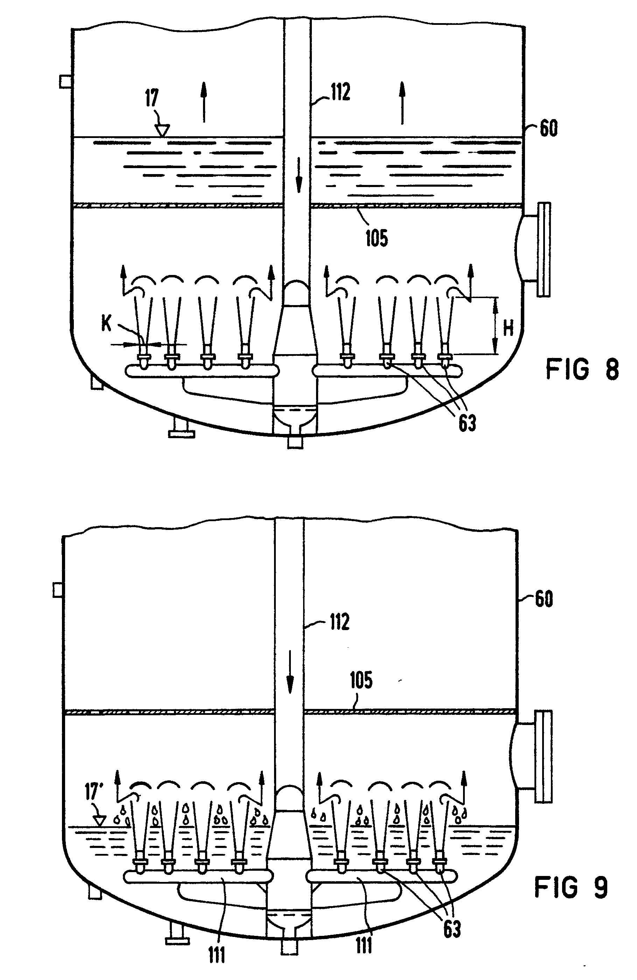

Die Venturiwäscher 63 können, wie in den Figuren 8 und 9 dargestellt ist, auch zu mehreren an horizontalen Rohren 111 sitzen, die sternförmig von einem zentralen Zuleitungsrohr 112 ausgehen. Sie sind als Rund- oder Rechteckventurirohre ausgebildet und haben eine Kehlenbreite K von 3 cm und eine Höhe H von 30 cm. Man kommt deshalb mit geringen Abmessungen des Behälters 60 aus, besonders dann, wenn oberhalb der Venturiwäscher 63 Prallabscheider 105 angeordnet sind, die nur kleine Durchlaßöffnungen aufweisen und sich über den gesamten Querschnitt des Behälters 60 erstrecken. Die Prallabscheider können wie FIG 8 zeigt, unter dem Wasserspiegel 17 liegen. Der Wasserspiegel kann aber auch, wie in FIG 9 bei 17' gezeigt, unter den Prallabscheider 105 liegen, so daß die Venturirohre 63 ohne Wasserüberdeckung frei ausblasen können. Die Prallabscheider 105 führen noch zu einer Strömungsvergleichmäßigung über den Behälterquerschnitt.

**Patentansprüche**

1. Verfahren zur Druckentlastung eines Kernkraftwerks mit einer Sicherheitshülle (1), die eine Auslaßöffnung, und ein daran angeschlossenes Filter (26 bis 28, 31; 62, 26; 100, 101) zum Zurückhalten insbesondere von Jod und Aerosolen aufweist, das mit einem Kamin (50) in Verbindung steht, **dadurch gekennzeichnet,** daß zur Steigerung des Massendurchsatzes

   a) das Filter (26 bis 28, 31; 62, 63; 100, 101) zumindest im Ansprechfalle mit einem Druck beaufschlagt wird, der im wesentlichen gleich dem jeweiligen Druck in der Sicherheitshülle (1) ist, und

   b) am Ausgang des Filters (26 bis 28, 31; 62, 26; 100, 101) eine Drosseleinrichtung (36, 37, 38; 85; 94) angeordnet ist, die bei der sich im Ansprechfall einstellenden Druckentlastung mit einer kritischen Entspannung arbeitet,

   so daß im Ansprechfalle das Filter (26 bis 28, 31; 62, 26; 100, 101) von einem über die Zeit gleichbleibenden Volumendurchsatz durchströmt wird.

2. Verfahren nach Anspruch 1, **dadurch gekennzeichnet,**
   - daß in einem Vorfilter (65; 100) eine Feuchtfilterung mit Tropfenabscheidung vorgenommen wird, und
   - daß die aus den Tropfen gebildete Flüssigkeit in einen Flüssigkeitsspeicher (18; 98) gefördert wird, wobei die im Vorfilter (65; 100) zurückgehaltenen Aerosole weitgehend mit der abgeschiedenen Flüssigkeit in den Flüssigkeitsspeicher (18; 98) geführt werden.

3. Verfahren nach Anspruch 1 oder 2, **dadurch gekennzeichnet,** daß zur Erhöhung des Abscheidegrads dem Vorfilter (65; 100) eine Feinfilterstufe (66, 101), vorzugsweise in Form einer Metallfaserbelegung von 2 bis 4 μm, nachgeschaltet ist, mit der der Dekontaminationsfaktor auf 1.000 bis 10.000 erhöht wird.

4. Verfahren nach einem der Ansprüche 1 bis 3, **dadurch gekennzeichnet,** daß vor dem Vorfiltern mit dem Vorfilter (65; 100) eine Naßwäsche mit einem Waschflüssigkeit (18, 98) enthaltenden Naßwäscher (15) vorgenommen wird, wobei der Naßwäscher (15) und der Vorfilter (65; 100) mit etwa dem gleichen Druck beaufschlagt werden.

5. Verfahren nach Anspruch 4, **dadurch gekennzeichnet,** daß der Waschflüssigkeit (18; 98) des Naßwäschers (15) eine alkalische Substanz zur Iodabsorption beigemischt ist.

6. Verfahren nach einem der Ansprüche 1 bis 5, **dadurch gekennzeichnet,** daß der Druckabfall vor dem Filter (26 bis 28, 31; 62, 26; 100, 101) höchstens halb so groß wie hinter dem Filter (26 bis 28, 31; 62, 63; 100, 101) ist.

7. Druckentlastungseinrichtung zur Ausübung des Verfahrens nach einem der Ansprüche 1 bis 6, **dadurch gekennzeichnet**
   - daß das Filter (26 bis 28, 31; 62, 26; 100, 101) an die Sicherheitshülle (1) angeschlossen ist,
   - daß zwischen dem Filter (26 bis 28, 31; 62, 26; 100, 101) und dem Kamin (50) eine Drosseleinrichtung (36, 37, 38; 85; 94) angeordnet ist, die im Ansprechfall im Bereich der Schallgeschwindigkeit arbeitet, und
   - daß in der Verbindung (11) zwischen der Sicherheitshülle (1) und dem Kamin (50) eine Absperreinrichtung (12, 13) vorgesehen ist, die zur Druckentlastung der Sicherheitshülle (1) geöffnet werden kann.

8. Druckentlastungseinrichtung nach Anspruch 7, **dadurch gekennzeichnet,** daß ein Naßwäscher (15) und der Filter (26, 62; 100, 101) in einem gemeinsamen Behälter (60) angeordnet sind, der vorzugsweise innerhalb der Sicherheitshülle (1) angeordnet ist.

9. Druckentlastungseinrichtung nach Anspruch 8, **dadurch gekennzeichnet,** daß der Naßwäscher (15) als Venturiwäscher (63) ausgebildet ist.

10. Druckentlastungseinrichtung nach Anspruch 9, **dadurch gekennzeichnet,** daß mehrere Venturiwäscher (63) sternförmig angeordnet sind.

11. Druckentlastungseinrichtung nach Anspruch 9 oder 10, **dadurch gekennzeichnet,** daß der Venturiwäscher (63) ein Verhältnis von Höhe (H) zu Kehlenbreite (K) von H/K ≤ 20, vorzugsweise etwa 10, hat.

12. Druckentlastungseinrichtung nach Anspruch 9, 10 oder 11, **dadurch gekennzeichnet,** daß der Venturiwäscher (63) eine größte Höhe (H) von H = 100 cm hat.

13. Druckentlastungseinrichtung nach Anspruch 9 bis 12, **dadurch gekennzeichnet,** daß der Venturiwäscher (63) eine maximale Kehlenbreite (K) von K = 5 cm, vorzugsweise etwa 3 cm, hat.

14. Druckentlastungseinrichtung nach einem der Ansprüche 9 bis 13, **dadurch gekennzeichnet,** daß oberhalb des Venturiwäschers (63) ein Prallabscheider (105) vorgesehen ist, der vorzugsweise in der Waschflüssigkeit (18; 98) liegt.

15. Druckentlastungseinrichtung nach einem der Ansprüche 8 bis 14, **dadurch gekennzeichnet,** daß der Behälter (60) mit einer Heizung (80; 99) beheizbar ist.

16. Druckentlastungseinrichtung nach Anspruch 15, **dadurch gekennzeichnet,** daß der Behälter (60) über eine Thermosyphonleitung (82) mit dem Inneren der Sicherheitshülle (1) verbunden ist.

17. Filtereinrichtung zur Filterung von Gasgemischen bei der Druckentlastung eines Kernkraftwerks gemäß dem Verfahren nach einem des ansprüche 1 bis 6 **dadurch gekennzeichnet,** daß in einem Behälter (60) im unteren Bereich ein Venturiwäscher (63) und im oberen Bereich eine Filtereinheit (62) angeordnet sind.

18. Filtereinrichtung nach Anspruch 17, **dadurch gekennzeichnet,** daß der Venturiwäscher (63) in einer Waschflüssigkeit (18; 98) im unteren Bereich des Behälters (60) eingetaucht ist.

19. Filtereinrichtung nach Anspruch 17 oder 18, **dadurch gekennzeichnet,** daß zusätzlich ein Filter (26) zur Zerkleinerung aufsteigender Gasbläschen oberhalb des Venturiwäschers (63) vorgesehen ist.

20. Filtereinrichtung nach einem der Ansprüche 17 bis 19,

**dadurch gekennzeichnet,** daß die Filtereinheit (62) eine Grobstufe (65) und eine Feinstufe (66) umfaßt.

21. Filtereinrichtung nach Anspruch 20,
    **dadurch gekennzeichnet,** daß die Grobstufe (65) und die Feinstufe (66) konzentrisch zueinander angeordnet sind.

22. Filtereinrichtung nach einem der Ansprüche 17 bis 21,
    **dadurch gekennzeichnet,** daß eine Rücklaufleitung (67) vorgesehen ist, die von der Filtereinheit (62) in den unteren Bereich des Behälters (60) führt.

## Claims

1. Method for the pressure relief of a nuclear power station having a safety containment (1) which has an outlet opening and a filter (26 to 28, 31; 62, 26; 100, 101) connected thereto for retaining, more particularly, iodine and aerosols, which filter is in communication with a stack (50), characterised in that for the purpose of increasing the mass throughput
   a) there acts upon the filter (26 to 28, 31; 62, 63; 100, 101), at least in the response condition, a pressure which is substantially equal to the respective pressure in the safety containment (1) and
   b) there is arranged at the output of the filter (26 to 28, 31; 62, 26; 100, 101) a throttle device (36, 37, 38; 85; 94) which, when the pressure relief cuts in, in the response condition, operates with a critical pressure release
   so that in the response condition a volume throughput, which is constant over time, flows through the filter (26 to 28, 31; 62, 26; 100, 101).

2. Method according to claim 1, characterised in that moisture filtration is effected in a preliminary filter (65; 100) with mist separation and in that the fluid formed from the mist is conveyed to a fluid reservoir (18; 98), with the aerosols retained in the preliminary filter (65; 100) largely being conducted to the fluid reservoir (18; 98) with the separated fluid.

3. Method according to claim 1 or 2, characterised in that for the purpose of raising the degree of separation there is subsequently connected to the preliminary filter (65; 100) a micro-filter stage (66, 101), preferably in the form of a metal fibre coating of 2 to 4 $\mu$m, with which the decontamination factor is raised to between 1.000 and 10.000.

4. Method according to one of the claims 1 to 3, characterised in that before preliminary filtering with the preliminary filter (65; 100) wet cleaning is effected with a wet scrubber (15) containing a washing fluid (18, 98), with substantially the same pressure acting upon the wet scrubber (15) and the preliminary filter (65; 100).

5. Method according to claim 4, characterised in that an alkaline substance is admixed with the washing fluid (18; 98) of the wet scrubber (15) for the purpose of iodine absorption.

6. Method according to one of the claims 1 to 5, characterised in that the pressure drop before the filter (26 to 28, 31; 62, 26; 100, 101) is at most half as great as after the filter (26 to 28, 31; 62, 63; 100, 101).

7. Pressure-relief device for performing the method according to one of the claims 1 to 6, characterised in that the filter (26 to 28, 31; 62, 26; 100, 101) is connected to the safety containment (1), in that there is arranged between the filter (26 to 28, 31; 62, 26; 100, 101) and the stack (50) a throttle device (36, 37, 38; 85; 94) which operates in the response condition in the sound velocity range and in that there is provided in the connection (11) between the safety containment (1) and the stack (50) a shut-off device (12, 13) which can be opened for the pressure relief of the safety containment (1).

8. Pressure-relief device according to claim 7, characterised in that a wet scrubber (15) and the filter (26, 62; 100, 101) are arranged in a common container (60) which is preferably arranged within the safety containment (1).

9. Pressure-relief device according to claim 8, characterised in that the wet scrubber (15) is formed as a venturi scrubber (63).

10. Pressure-relief device according to claim 9, characterised in that several venturi scrubbers (63) are arranged in a star-shaped manner.

11. Pressure-relief device according to claim 9 or 10, characterised in that the venturi scrubber (63) has a ratio of height (H) to throat width (K) of $H/K \leq 20$, preferably approximately 10.

12. Pressure-relief device according to claim 9, 10 or 11, characterised in that the venturi scrubber (63) has a greatest height (H) of H = 100 cm.

13. Pressure-relief device according to claim 9 to 12, characterised in that the venturi scrubber (63) has a maximum throat width (K) of K = 5 cm, preferably approximately 3 cm.

14. Pressure-relief device according to one of the claims 9 to 13, characterised in that there is provided above the venturi scrubber (63) a baffle separator (105) which preferably lies in the washing fluid (18; 98).

15. Pressure-relief device according to one of the claims 8 to 14, characterised in that the container (60) can be heated with a heating system (80; 99).

16. Pressure-relief device according to claim 15, characterised in that the container (60) is connected, by way of a thermosiphon line (82), with the interior of the safety containment (1).

17. Filter device for filtering gas mixtures in the case of pressure relief of a nuclear power station in accordance with the method according to one of the claims 1 to 6, characterised in that a venturi scrubber (63) is arranged in a container (60) in the lower region thereof and a filter unit (62) is arranged in the upper region thereof.

18. Filter device according to claim 17, characterised in that the venturi scrubber (63) is immersed in a washing fluid (18; 98) in the lower region of the container (60).

19. Filter device according to claim 17 or 18, characterised in that a filter (26) is provided in addition for the purpose of reducing the size of rising gas bubbles above the venturi scrubber (63).

20. Filter device according to one of the claims 17 to 19, characterised in that the filter unit (62) comprises a coarse stage (65) and a fine stage (66).

21. Filter device according to claim 20, characterised in that the coarse stage (65) and the fine stage (66) are arranged concentrically in relation to each other.

22. Filter device according to one of the claims 17 to 21, characterised in that a return line (67) is provided, which line leads from the filter unit (62) to the lower region of the container (60).

**Revendications**

1. Procédé de dépressurisation d'une centrale nucléaire comportant une enceinte de confinement (1), qui comporte une ouverture d'évacuation et un filtre (26 à 28, 31 ; 62, 26 ; 100, 101) qui y est raccordé, qui est destiné à retenir notamment l'iode et les aérosols et qui communique avec une cheminée (50), caractérisé en ce que, pour augmenter le débit massique

   a) le filtre (26 à 28, 31 ; 62, 63 ; 100, 101) est chargé, au moins en cas de déclenchement, avec une pression qui est sensiblement égale à la pression qui règne dans l'enceinte de confinement (1), et

   b) à la sortie du filtre (26 à 28, 31 ; 62, 26 ; 100, 101), est monté un dispositif d'étranglement (36, 37, 38 ; 85 ; 94) qui opère avec une détente critique lors de la dépressurisation qui s'établit dans le cas d'un déclenchement,

   de sorte que, dans le cas d'un déclenchement, le filtre (26 à 28, 31 ; 62, 26 ; 100, 101) est parcouru par un débit volumique constant dans le temps.

2. Procédé suivant la revendication 1 caractérisé,
   - en ce qu'une filtration par voie humide, avec séparation de gouttes est effectuée dans un préfiltre (65 ; 100), et
   - en ce que le liquide formé par les gouttes est envoyé dans un réservoir à liquide (18 ; 98), les aérosols retenus dans le préfiltre (65 ; 100) étant envoyés, dans une grande mesure, avec le liquide séparé dans le réservoir à liquide (18 ; 98).

3. Procédé suivant la revendication 1 ou 2, caractérisé en ce que, pour augmenter le taux de séparation, un étage de filtration fine (66 ; 101), de préférence sous la forme d'un revêtement de fibres métalliques de 2 à 4 mm, est monté en aval du préfiltre (65 ; 100) et permet de porter le facteur de décontamination jusqu'à des valeurs de 1.000 à 10.000.

4. Procédé suivant l'une des revendications 1 à 3, caractérisé en ce qu'avant la préfiltration par le préfiltre (65 ; 100), un lavage par voie humide est effectué par un laveur par voie humide (15) contenant du liquide de lavage (18 ; 98), le laveur par voie humide (15) et 1e préfiltre (65 ; 100) étant mis à peu près sous la même pression.

5. Procédé suivant la revendication 4,

caractérisé en ce qu'une substance alcaline est mélangée au liquide de lavage (18 ; 98) du laveur par voie humide (15) pour l'absorption de l'iode.

6. Procédé suivant l'une des revendications 1 à 5,

caractérisé en ce que la perte de charge en amont du filtre (26 à 28, 31 ; 62, 26 ; 100, 101) est au plus égale à la moitié de celle présente en aval du filtre (26 à 28, 31 ; 62, 26 ; 100, 101).

7. Dispositif de dépressurisation pour la mise en oeuvre du procédé suivant l'une des revendications 1 à 6,
caractérisé
   - en ce que le filtre (26 à 28, 31 ; 62, 26 ; 100, 101) est raccordé à l'enceinte de confinement (1),
   - entre le filtre (26 à 28, 31 ; 62, 26 ; 100, 101) et la cheminée (50) est monté un dispositif d'étranglement (36, 37, 38 ; 85 ; 94) qui opère en cas de déclenchement dans la plage de la vitesse du son, et
   - en ce que, dans la liaison entre l'enceinte de
   - en ce que, dans la liaison entre l'enceinte de confinement (1) et la cheminée (50), est prévu un dispositif d'arrêt (12, 13), qui peut être ouvert pour dépressuriser l'enceinte de confinement (1).

8. Dispositif de dépressurisation suivant la revendication 7,

caractérisé en ce qu'un laveur par voie humide (15) et le filtre (26, 62 ; 100, 101) sont disposés dans une cuve commune (60) qui est disposée, de préférence, dans l'enceinte de confinement (1).

9. Dispositif de dépressurisation suivant la revendication 8,

caractérisé en ce que le laveur par voie humide (15) est constitué en laveur à venturi (63).

10. Dispositif de dépressurisation suivant la revendication 9,

caractérisé en ce que plusieurs laveurs à venturi (63) sont disposés en forme d'étoile.

11. Dispositif de dépressurisation suivant la revendication 9 ou 10,

caractérisé en ce que le laveur à venturi (63) a un rapport de la hauteur (H) à la largeur (K) de la gorge, qui est inférieur ou égal à 20 et, de préférence, à environ 10.

12. Dispositif de dépressurisation suivant la revendication 9, 10 ou 11,

caractérisé en ce que la plus grande hauteur (H) du est laveur à venturi (63) de H = 100 cm.

13. Dispositif de dépressurisation suivant l'une des revendications 9 à 12,

caractérisé en ce que le laveur à venturi (63) a une largeur de gorge maximum (K) de K = 5 cm et, de préférence, de 3 cm environ.

14. Dispositif de dépressurisation suivant l'une des revendications 9 à 13,

caractérisé en ce qu'au-dessus du laveur à venturi (63) est prévu un séparateur par chocs (105) qui se trouve, de préférence, dans le liquide de lavage (18 ; 98).

15. Dispositif de dépressurisation suivant l'une des revendications 8 à 14,

caractérisé en ce que la cuve (60) peut être chauffée par un dispositif chauffage (80 ; 99).

16. Dispositif de dépressurisation suivant la revendication 15,

caractérisé en ce que la cuve (60) communique avec l'intérieur de l'enceinte de confinement (1), par un conduit à thermosiphon (82).

17. Dispositif de filtration pour filtrer des mélanges gazeux lors de la dépressurisation d'une centrale nucléaire, conformément au procédé suivant l'une des revendications 1 à 6,

caractérisé en ce que, dans une cuve (60) sont disposés, dans la partie inférieure, un laveur à venturi (63) et, dans la partie supérieure, une unité de filtration (62).

18. Dispositif de filtration suivant la revendication 17,

caractérisé en ce que le laveur à venturi (63) est plongé dans un liquide de lavage (18 ; 98), à la partie inférieure de la cuve (60).

19. Dispositif de filtration suivant la revendication 17 ou 18,

caractérisé en ce qu'il est prévu, en outre, au-dessus du laveur à venturi (63), un filtre (26) pour diminuer la dimension des bulles de gaz ascendantes.

20. Dispositif de filtration suivant l'une des revendications 17 à 19,

caractérisé en ce qu'une unité de filtration (62) comprend un étage grossier (65) et un étage fin (66).

21. Dispositif de filtration suivant la revendication 20,

caractérisé en ce que l'étage grossier (65) et l'étage fin (66) sont disposés concentriquement l'un à l'autre.

22. Dispositif de filtration suivant l'une des revendications 17 à 21,

caractérisé en ce qu'il est prévu un conduit de recyclage (67), qui mène de l'unité de filtration (62) à la partie inférieure de la cuve (60).

EP 0 285 845 B1

FIG 1

FIG 2

FIG 3

FIG 4

FIG 5

EP 0 285 845 B1

FIG 6

FIG 7

FIG 8

FIG 9